# EUROPÄISCHE PATENTSCHRIFT

(11) **EP 3 356 807 B1**
(45) Veröffentlichungstag und Bekanntmachung des Hinweises auf die Patenterteilung: **23.10.2019**
(21) Anmeldenummer: 16745464.4
(22) Anmeldetag: 01.08.2016
(51) Int. Cl.: G01N 27/18, G01L 7/08, G01F 1/684

(54) **SENSORVORRICHTUNG ZUR ERFASSUNG MINDESTENS EINER EIGENSCHAFT EINES FLUIDEN MEDIUMS**
SENSOR ARRANGEMENT FOR DETECTING AL LEAST ONE PROPERTY OF A FLUID
ENSEMBLE CAPTEUR POUR DÉTERMINER AU MOINS UNE PROPRIÉTÉ D'UN FLUIDE

(30) Priorität: 02.10.2015 DE 102015219070
(43) Veröffentlichungstag der Anmeldung: 08.08.2018
(73) Patentinhaber: Robert Bosch GmbH, 70442 Stuttgart (DE)
(72) Erfinder: LANG, Tobias, 70197 Stuttgart (DE)
(86) Internationale Anmeldenummer: PCT/EP2016/068272
(87) Internationale Veröffentlichungsnummer: WO 2017/054959

(56) Entgegenhaltungen:
- EP-A2- 0 497 534
- DE-A1-102009 026 676
- DE-U1-202007 003 947
- US-A- 5 319 980
- US-B2- 6 516 670
- US-B2- 7 150 197

## Beschreibung

### Stand der Technik

Die Erfindung betrifft eine Sensorvorrichtung zur Erfassung mindestens einer Eigenschaft eines fluiden Mediums, insbesondere mindestens eines Gases. Derartige Sensorvorrichtungen werden beispielsweise in der Automobiltechnik zum qualitativen und/oder quantitativen Nachweis mindestens einer Gaskomponente eingesetzt, beispielsweise zur Konzentrationsmessung von Sauerstoff in einem Luft-Kraftstoff-Gemisch und/oder zur Konzentrationsmessung von Wasserstoff in einem Wasserstoff-Luft-Gemisch. Die Erfindung ist jedoch auch in anderen Arten der Sensorik einsetzbar.

Bei vielen Prozessen, beispielsweise auf dem Gebiet der Verfahrenstechnik, der Chemie oder des Maschinenbaus, müssen Gaskonzentrationen zuverlässig bestimmt werden und/oder es muss definiert ein Gasmassenstrom, insbesondere ein Luftmassenstrom, zugeführt werden. Hierzu zählen insbesondere Verbrennungsprozesse, welche unter geregelten Bedingungen ablaufen. Ein wichtiges Beispiel, auf das die vorliegende Erfindung jedoch nicht beschränkt ist, ist dabei die Verbrennung von Kraftstoff in Verbrennungskraftmaschinen von Kraftfahrzeugen, insbesondere mit anschließender katalytischer Abgasreinigung. Auch die Zuführung von Gasen genau definierter Zusammensetzung für Brennstoffzellen ist als Anwendungsgebiet zu nennen. Auch sicherheitsrelevante Anwendungen sind zu nennen. So kann beispielsweise ein Wasserstoffsensor in Brennstoffzellen-Fahrzeugen eingesetzt werden, um Fahrzeuginsassen bei einem Wasserstoffaustritt, beispielsweise aus den Brennstoffzellen heraus in eine Umgebung oder in einen Abgastrakt, welcher grundsätzlich ganz oder zumindest teilweise Luft und Wasserdampf führt, zu warnen. Luft wird näherungsweise ab einem Wasserstoffanteil von 4 % zündungsfähig und bei höherem Anteil sogar explosionsfähig, so dass der Wasserstoffsensor beispielsweise mit einer entsprechenden Warnvorrichtung oder einer entsprechenden Notfallautomatik oder einer entsprechenden Regelautomatik gekoppelt werden kann. Auch andere sicherheitsrelevante Anwendungen derartiger Gassensoren sind denkbar.

Zur Messung eines Gasstroms und/oder einer Gaskonzentration werden verschiedene Typen von Sensoren eingesetzt. Eine Klasse derartiger Sensoren sind Sensoren mit einem Sensorchip. Ein aus dem Stand der Technik bekannter Sensortyp dieser Klasse ist der so genannte Heißfilmluftmassensensor (HFM), welcher beispielsweise in DE 196 01 791 A1 in einer Ausführungsform beschrieben ist. Bei derartigen Heißfilmluftmassenmessern wird üblicherweise ein Sensorchip eingesetzt, welcher eine dünne Sensormembran aufweist, beispielsweise ein Siliziumsensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt.

Neben der Erfassung einer Strömung spielt die Detektion und Messung von Komponenten, aus welchen sich das jeweilige gasförmige Fluid zusammensetzt, eine große Rolle. Ein Sensorprinzip beruht auf der unterschiedlichen Wärmekapazität und/oder Wärmeleitfähigkeit der unterschiedlichen Fluidkomponenten und ist beispielsweise in M. Arndt: "Micromachined Thermal Conductivity Hydrogen Detector for Automotive Applications", Sensors, 2002. Proceedings of IEEE beschrieben. So wird beispielsweise zur Detektion von Wasserstoff in einem Luft-Wasserstoff-Gemisch die Tatsache ausgenutzt, dass Wasserstoff eine höhere Wärmeleitfähigkeit besitzt als Luft bzw. die Komponenten der Luft. Bei einem Sensoraufbau, der ähnlich gestaltet ist wie der von Heißfilmluftmassenmessern (HFM), diffundiert zum Beispiel ein Luft-Wasserstoff-Gemisch durch eine dünne Membran oder ein enges Gitter oder einen Spalt oder einen Kanal in einen Messraum eines Sensors. Das Vorhandensein von Wasserstoff im gasförmigen Fluid verändert die Temperatur der beheizten Messmembran oder deren Wärmeleistung, die an die Umgebungsluft abgegeben wird. Daraus wiederum wird ein Messsignal erzeugt, welches die Konzentration des Wasserstoffs widerspiegelt.

Die DE 10 2006 010 901 A1 beschreibt einen Fluidsensor zur Detektion von fluiden Medien, der einen Sensorchip mit einer mit dem fluiden Medium beaufschlagbaren Chipoberfläche aufweist. Diese Chipoberfläche beinhaltet eine Messoberfläche und eine Festlandsoberfläche. Auf der Messoberfläche sind Leiterbahnen einer Sensorschaltung mit mindestens einem Heizelement und mindestens einem Temperaturfühler aufgebracht.

Aus der EP 0 497 534 A2 ist eine Drucksensorvorrichtung bekannt, die ein Sensorelement mit mindestens einer ersten Membran aufweist, das in einer Aufnahme eines Gehäuses aufgenommen ist, wobei zwischen Sensorelement und dem Gehäuse ein Dichtungselement angeordnet ist ein Vorspannelement zum Vorspannen des Sensorelements gegen das erste Dichtelement ausgebildet ist.

Trotz der zahlreichen Vorteile der aus dem Stand der Technik bekannten Sensorvorrichtungen beinhalten diese noch Verbesserungspotenzial. So erfordert der Einsatz eines Chips unter Einfluss aggressiver Medien, wie beispielsweise deionisiertes Wasser im Abgastrakt von Brennstoffzellensystemen, eine Abdichtung mit einem medienresistenten Dichtelement, wie beispielsweise einem Elastomer, anstelle eines Silikon- oder Epoxid-Klebstoffs. Die Dichtheit wird dann durch dauerhafte elastische Verformung des Elastomers erzielt, also durch Andruck mittels eines Vorspannelements. Ein Dünndrahtbondprozess auf einem Halbleiterchip erfordert aufgrund der einzukoppelnden, gegebenenfalls oszillierenden Kräfte eine stabile, möglichst starre Fixierung des Chips, die durch Andruck an eine solche Dichtung nicht zuverlässig gegeben ist.

### Offenbarung der Erfindung

Es wird daher eine Sensorvorrichtung zur Erfassung mindestens einer Eigenschaft eines fluiden Mediums vorgeschlagen, welche die Nachteile bekannter Sensorvorrichtungen zumindest weitgehend vermeiden und bei der ein auf einer elastischen Dichtung montierter Sensorchip mittels eines Dünndraht-Bondprozesses elektrisch kontaktiert werden kann.

Eine erfindungsgemäße Sensorvorrichtung zur Erfassung mindestens einer Eigenschaft eines fluiden Mediums umfasst mindestens ein erstes Sensorelement zur Erfassung der mindestens einen Eigenschaft, wobei das erste Sensorelement mindestens eine erste Membran aufweist, mindestens ein Gehäuse mit mindestens einer ersten Aufnahme, wobei das erste Sensorelement zumindest teilweise in der ersten Aufnahme aufgenommen ist, mindestens ein erstes Dichtelement, wobei das erste Dichtelement zwischen dem ersten Sensorelement und dem Gehäuse angeordnet und zum Abdichten des ersten Sensorelements gegen das Gehäuse ausgebildet ist, und ein Vorspannelement, wobei das Vorspannelement zum Vorspannen des ersten Sensorelements gegen das erste Dichtelement ausgebildet ist. Erfindungsgemäß wird vorgeschlagen, dass das erste Sensorelement und das Vorspannelement stoffschlüssig miteinander verbunden sind.

Unter einem "fluiden Medium" im Sinne der vorliegenden Erfindung ist grundsätzlich ein beliebiger Stoff im fluiden, insbesondere flüssigen und/oder gasförmigen, Zustand zu verstehen, welcher einer beliebig langsamen Scherung keinen Widerstand entgegensetzt. Im Allgemeinen kann der fluide Zustand eines Stoffes temperatur- und/oder druckabhängig sein. Das fluide Medium kann als Reinstoff oder als Stoffgemisch vorliegen. Beispielsweise kann es sich um ein Luft-Wasserstoff-Gemisch handeln. Auch andere Flüssigkeiten, Flüssigkeitsgemische, Gase oder Gasgemische sind beispielsweise einsetzbar.

Unter einem "Sensorelement" ist im Rahmen der vorliegenden Erfindung ein grundsätzlich beliebiges Element zu verstehen, mittels dessen mindestens eine Messgröße erfasst werden kann. Das Sensorelement kann insbesondere eingerichtet sein, um mindestens ein Signal zu erzeugen, insbesondere mindestens ein elektrisches Signal, beispielsweise ein analoges und/oder digitales Signal. Das Sensorelement kann insbesondere eingerichtet sein, um eine Wärmeleitfähigkeit eines Gases zu bestimmen. Der Begriff "Wärmeleitfähigkeit" beschreibt im Allgemeinen einen Transport von Energie, in Form von Wärme, durch einen Stoff aufgrund eines Temperaturgefälles. Das Sensorelement kann als Chip ausgebildet sein. Der Chip kann mindestens ein Basiselement umfassen, welches mindestens eine Kaverne aufweist. Der Begriff "Kaverne" bezieht sich im Rahmen der vorliegenden Erfindung auf einen frei und/oder offen gestalteten Hohlraum und/oder eine Aussparung in dem Basiselement, wobei es sich beispielsweise um einen durchgängigen Hohlraum oder auch um einen lediglich in das Basiselement hineinragenden Hohlraum handeln kann.

Die Membran kann sich über eine Oberfläche des Basiselements erstrecken und die Kaverne des Basiselements zumindest teilweise bedecken. Das Basiselement und/oder die Kaverne können eine quaderförmige Grundform aufweisen. Andere Ausführungsformen sind jedoch denkbar. Weiterhin kann das Basiselement aus mindestens einem Halbleitermaterial hergestellt sein. Das Halbleitermaterial kann insbesondere ausgewählt sein aus der Gruppe bestehend aus: Silizium, Germanium, Bor, Selen, einer Siliziumverbindung, einer Galliumverbindung, einer Indiumverbindung. Die Membran kann ebenfalls das mindestens eine Halbmaterial in Reinform oder als Verbindung aufweisen, z.B. als ein Oxid wie etwa Silizium-Dioxid und/oder als ein Nitrid wie etwa SiliziumNitrid und/oder weitere Verbindungen. Weiterhin können die Membran und das Basiselement gemeinsam als Chip ausgebildet sein.

Weiterhin kann das Sensorelement mindestens ein auf der Membran angeordnetes Messelement umfassen. Der Begriff "Messelement" bezeichnet im Sinne der vorliegenden Erfindung ein vorzugsweise elektronisches Gerät, welches eingerichtet ist, um mindestens ein Signal zu detektieren. Insbesondere kann es sich bei dem Messelement um einen Temperaturfühler handeln. Beispielsweise kann der Temperaturfühler mindestens einen elektrischen Widerstand aufweisen.

Unter einer "Membran" im Sinne der vorliegenden Erfindung ist grundsätzlich ein beliebiges Element mit einer quadratischen, rechteckigen, polygonförmigen oder gerundeten flächigen Form und einer Dicke zu verstehen, wobei die Ausdehnung des Elements in den Dimensionen innerhalb der flächigen Form die Dicke des Elements überschreitet, beispielsweise um einen Faktor von 10 bis 10000, vorzugsweise um einen Faktor von 100 bis 3000, vorzugsweise um einen Faktor von 400 bis 1600, vorzugsweise um einen Faktor von 600 bis 1000. Die Membran kann für unterschiedliche Stoffe unterschiedlich durchlässig gestaltet sein. Beispielsweise kann die Membran zumindest weitgehend undurchlässig für mindestens einen oder mehrere Stoffe sein. Beispielsweise kann die Membran für mindestens einen oder mehrere Stoffe in eine Richtung durchlässig sein.

Beispielsweise kann die Membran für mindestens einen oder mehrere Stoffe in beide Richtungen durchlässig sein. Auch andere Ausführungsformen sind grundsätzlich möglich.

Der Begriff "Gehäuse" bezeichnet im Sinne der vorliegenden Erfindung grundsätzlich ein beliebig geformtes Bauteil, welches mindestens einen Gehäuseinnenraum umschließt. Der Gehäuseinnenraum kann eingerichtet sein, um das fluide Medium aufzunehmen. Das Gehäuse kann ganz oder teilweise als Rohr ausgebildet sein. Der Begriff "Rohr" bezeichnet grundsätzlich einen beliebigen, von einem fluiden Medium durchströmbaren Hohlkörper. Insbesondere kann es sich um einen länglichen Hohlkörper handeln. Das Rohr kann beispielsweise ganz oder teilweise aus einem starren Material oder auch ganz oder teilweise aus einem flexiblen Material hergestellt sein, beispielsweise einem Metall und/oder einem Kunststoff. Das Rohr kann grundsätzlich einen beliebigen Querschnitt aufweisen, beispielsweise einen runden, einen ovalen oder einen polygonalen Querschnitt. Alternativ kann das Gehäuse auch ein Bauteil umfassen, das in der Aufnahme des Rohrs befestigt ist. Beispielsweise kann das Bauteil ein Steckfühler sein, welcher im Rohr der Brennstoffzelle befestigt ist. Auch andere Ausführungsformen sind grundsätzlich denkbar.

Das Gehäuse umfasst wie oben erwähnt weiterhin mindestens eine Aufnahme. Die Aufnahme kann beispielsweise einen rechteckigen Querschnitt aufweisen. Auch andere Ausführungsformen sind denkbar. Das Sensorelement ist ganz oder teilweise in der Aufnahme aufgenommen.

Der Begriff "Dichtelement" bezeichnet ein beliebiges Element, welches eingerichtet ist, um das Sensorelement gegen das Gehäuse abzudichten. Das Dichtelement kann eingerichtet sein, um Wärme an den Gehäuseinnenraum zu übertragen. Weiterhin kann das Dichtelement eingerichtet sein, um eine durchgängige Verbindung zwischen dem Gehäuse und dem Sensorelement zu bilden. Das Dichtelement ist zwischen dem Sensorelement und dem Gehäuse angeordnet. Das Dichtelement kann ein beliebig geformtes Element sein, vorzugsweise ein Dichtungsring, vorzugsweise ein O-Ring mit einem rechteckigen Querschnitt. Das Dichtelement kann ganz oder teilweise aus einem medienresistenten Material hergestellt sein. Insbesondere kann das Dichtelement ganz oder teilweise aus einem Elastomer, insbesondere aus einem Ethylen-Propylen-Dien-Kautschuk hergestellt sein. Das Dichtelement kann mindestens ein Matrixmaterial umfassen, insbesondere ein medienresistentes Matrixmaterial, welchem mindestens ein weiteres Material beigemischt ist. Das weitere Material kann ausgewählt sein aus der Gruppe bestehend aus: mindestens einem metallischen Werkstoff, mindestens einem keramischen Werkstoff. Der metallische und/oder der keramische Werkstoff können als Partikel ausgebildet sein. Insbesondere können die Partikel eine Partikelgröße oder mittlere Partikelgröße von weniger als 1 mm aufweisen, vorzugsweise von weniger als 100 µm. Beispielsweise kann es sich bei den Partikeln um Partikel mit einer mittleren Partikelgröße von 0,5 µm bis 100 µm handeln.

Unter einer stoffschlüssigen Verbindung ist im Rahmen der vorliegenden Erfindung eine Verbindung zu verstehen, bei der die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Zu den stoffschlüssigen Verbindungen gehört insbesondere Löten, Schweißen, Kleben und Vulkanisieren.

Im Rahmen der vorliegenden Erfindung werden die Ausdrücke "erste" und "zweite" lediglich zur begrifflichen Unterscheidung der jeweiligen zugehörigen Bauteile verwendet und nicht, um eine bestimmte Reihenfolge oder Gewichtung dieser Bauteile anzugeben.

Im Rahmen der vorliegenden Erfindung wird vorgeschlagen, das erste Sensorelement und das Vorspannelement mittels eines Klebstoffs miteinander zu verbinden. Dabei kann das erste Sensorelement und das Vorspannelement mittels eines Klebstoffs flächig miteinander verbunden sein. Alternativ kann das Vorspannelement eine Nut aufweisen, die mit Klebstoff gefüllt ist.

Das Gehäuse kann eine zweite Aufnahme aufweisen. Die Sensorvorrichtung kann weiterhin mindestens ein zweites Sensorelement zur Erfassung der mindestens einen Eigenschaft und ein zweites Dichtelement umfassen. Das zweite Sensorelement kann mindestens eine zweite Membran aufweisen. Das zweite Sensorelement kann zumindest teilweise in der zweiten Aufnahme aufgenommen sein. Das zweite Dichtelement kann zwischen dem zweiten Sensorelement und dem Gehäuse angeordnet und zum Abdichten des zweiten Sensorelements gegen das Gehäuse ausgebildet sein.

Das zweite Sensorelement und das Vorspannelement können stoffschlüssig miteinander verbunden sein, beispielsweise mittels eines Klebstoffs. Das zweite Sensorelement und das Vorspannelement können mittels eines Klebstoffs flächig miteinander verbunden sein. Alternativ kann das Vorspannelement eine Nut aufweisen, die mit dem Klebstoff gefüllt ist. Das erste Sensorelement und das zweite Sensorelement können wärmeleitfähig miteinander verbunden sein. Beispielsweise sind das erste Sensorelement und das zweite Sensorelement mittels des Vorspannelements wärmeleitfähig miteinander verbunden. Dadurch lässt sich die Messgenauigkeit der Sensorvorrichtung mittels einer solchen Wärmebrücke verbessern. Bevorzugt wird dabei ein Klebstoff aus einem wärmeleitfähigen Material eingesetzt. Alternativ kann auch ein zugbelastbarer Klebstoff mit geringer Wärmeleitfähigkeit verwendet werden und weiterer Werkstoff, der zusätzlich zur Wärmeleitung zwischen Chip und Vorspannelement eingebracht wird, eingesetzt werden. Dieser weitere Werkstoff kann ein Klebstoff, ein Gel, eine Paste, ein Elastomer oder ein fester Werkstoff sein. Alternativ oder zusätzlich zur Klebenut kann auch eine flächige Klebung angewandt werden. Das Vorspannelement kann zum Vorspannen des zweiten Sensorelements gegen das zweite Dichtelement ausgebildet sein. Das Vorspannelement kann derart ausgebildet sein, dass es mit der ersten Membran ein erstes Referenzvolumen und mit der zweiten Membran ein zweites Referenzvolumen einschließt. Wird nun ausschließlich das erste Sensorelement dem zu messenden fluiden Medium ausgesetzt und das zweite Sensorelement als Referenzsensorelement eingesetzt, dann kann die Messgenauigkeit der Sensorvorrichtung erheblich verbessert werden, indem auf beide Sensorelemente gleichermaßen wirkende Umgebungseinflüsse kompensiert werden können.

Ein Grundgedanke der vorliegenden Erfindung ist, das mindestens eine Sensorelement zusätzlich mit dem Vorspannelement durch eine starre Klebung auf Zug zu verbinden, so dass ein Dünndrahtprozess zum elektrischen Kontaktieren des mindestens einen Sensorelements keine wesentlichen zusätzlichen Druckkräfte in das Dichtelement einleitet, sondern die beim Bondprozess eingebrachten Kräfte als Zug- bzw. Scherkräfte über die stoffschlüssige Verbindung, beispielsweise Klebung, und das Vorspannelement bis zum Gehäuse abgeleitet werden. Bevorzugt ist das Vorspannelement aus Metall hergestellt und verbindet die Sensorelemente mechanisch und wärmeleitend.

Vereinfacht gesagt wird der Sensorchip von dem Vorspannelement wie beispielsweise einen Niederhalter auf das Dichtelement gedrückt, welches auf einem Teil des Gehäuses aufliegt. Das Vorspannelement kann den entsprechenden Andruck dauerhaft aufbringen, da er durch eine erste feste Verbindung mit dem Gehäuse verbunden ist. Diese Verbindung kann eine Klebung, Verschraubung, Verklipsung bzw. Verrastung oder Verklemmung, eine Verschweißung oder eine andere Art der Verbindung sein.

Das Vorspannelement ist mit einer Klebenut versehen, die mit einem Klebstoff gefüllt ist, der im ausgehärteten Zustand eine große Härte aufweist und insbesondere zugbelastbar ist. Als Klebstoff eignen sich hierfür insbesondere Werkstoffe aus der Klasse der Epoxide, aber auch andere ausreichend zugbelastbare Klebstoffe, wie z.B. härtere Silikonklebstoffe, sind an dieser Stelle geeignet, so dass sich letztendlich eine zweite feste Verbindung ergibt.

Vorteilhaft für den gleichzeitigen Einsatz des Niederhalters als Wärmekopplung zu einem weiteren Sensorchip ist außerdem die Wahl eines wärmeleitenden Klebstoffs oder eines mit mindestens einem wärmeleitenden weiteren Stoff gefüllten Klebstoffs. Alternativ kann aber auch ein zugbelastbarer Klebstoff mit geringerer Wärmeleitung verwendet werden und ein weiterer, der separat und zusätzlich zur Wärmeleitung zwischen Chip und Niederhalter eingebracht wird. Dieser weitere Werkstoff kann ein Klebstoff, ein Gel, eine Paste, ein Elastomer oder ein fester Werkstoff sein. Alternativ oder zusätzlich zur Klebenut kann auch eine flächige Klebung angewandt werden.

Der Sensorchip wird mittels Dünndrahtbonds mit weiteren Funktionselementen des Gassensors elektrisch verbunden, die z.B. auf einer Leiterplatte untergebracht sind. Die Bonddrähte werden mittels eines Bondkeils auf dem Chip befestigt und von dort bogenförmig auf die Leiterplatte gezogen. Für den Bondprozess kommen je nach verwendeten Materialien und Geometrien z.B. der Bondpads auf dem Chip, Bondpads auf der Leiterplatte, Bonddraht, unterschiedliche Verfahren in Frage, wie z.B. ein ball- oder wedge-bond Prozess. Die beim Bondvorgang eingebrachten Kräfte werden primär nicht auf das Elastomer übertragen, sondern als Scher- und/oder Zugkräfte über die zweite feste Verbindung, das Vorspannelement und die erste feste Verbindung auf das Gehäuse abgeleitet, so dass der Chip deutlich geringere Bewegungsamplituden zeigt, als wenn er durch den Niederhalter lediglich gegen das Elastomer gedrückt würde.

Bei einem weiterem Ausführungsbeispiel können zwei Sensorchips vorgesehen sein, wobei das Vorspannelement als Wärmebrücke dient. Über den Membranen sind im Vorspannelement Aussparungen als Referenzvolumina ausgebildet, um die herum jeweils eine Klebenut verläuft. Beide Referenzvolumina sind durch einen halboffenen Kanal miteinander verbunden und durch eine gemeinsame Bohrung oder Öffnung nach oben mit dem Sensorinnenraum in Kontakt. Nach Montage der Sensorchips auf bzw. unter der Metallwärmebrücke bleibt der Verbindungskanal offen, um auch einen Zugang zur Kavernenseite des Referenzchips zu ermöglichen.

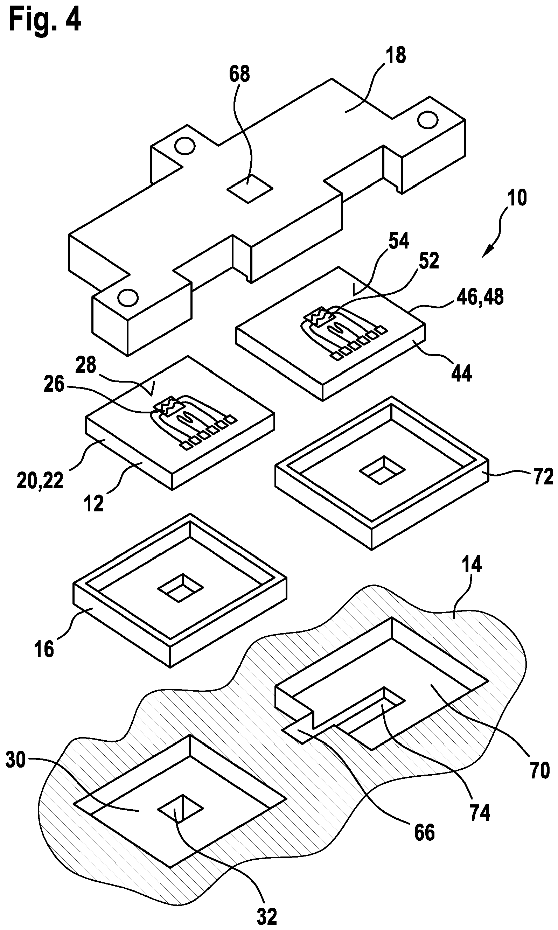

In der Explosionsdarstellung in Abbildung 4 sind die Wärmebrücke und Sensorchips mit weiteren Bauteilen von "oben" dargestellt, d.h. von der dem Messmedium abgewandten Seite her gesehen. Von oben nach unten sind dies: die Metallwärmebrücke, beide Sensorchips, zwei Dichtungsformkörper und das Sensorgehäuse mit Sensorchip-Aufnahme und kavernenseitiger Messgaszuführung (links) bzw. Referenzgaszuführung (rechts).

Die Sensorchips und Dichtungen können innerhalb der Aussparungen des Sensorgehäuses montiert werden. Bevorzugt wird es diese Kombination allerdings als Baugruppe während der Fertigung nicht geben, da es zweckmäßiger ist, die Sensorchips zuerst an der Wärmebrücke in Form des Vorspannelements zu befestigen und dann erst in das Sensorgehäuse bzw. die Dichtung einzusetzen. Die Kavernenseite des Referenzchips erhält unter der Dichtung hindurch einen Zugang zu dem offenen Bereich zwischen beiden Chips, so dass das auch an die Membranseite der Chips gelangende Referenzgas z.B. Umgebungsluft den Referenzchip beidseitig beaufschlagen kann. Beide Chips sind möglichst gleichartig aufgebaut. Wird der Referenz-Chip kleiner ausgestaltet, dann sollte er zumindest eine möglichst gleichartige Membran wie der eigentliche Sensorchip umfassen.

Falls das Referenzgas der Umgebungsluft entspricht, kann die Dichtung am Referenzchip optional auch entfallen, da der Chip ohnehin beidseitig vom Referenzgas beaufschlagt wird. Allerdings kann das Vorsehen der Dichtung auch in diesem Fall sinnvoll sein, alleine um an beiden Sensorchips für möglichst identische Verhältnisse zu sorgen. Dies gilt um so mehr, wenn die Dichtungen neben ihrer Dichtfunktion für weitere Aufgaben eingesetzt werden, z.B. zum Festklemmen zusätzlicher, hier nicht explizit dargestellter Funktionselemente wie z.B. Metallnetzen, Blenden, Folien und dergleichen.

Die feste Verbindung zwischen der Metallwärmebrücke und dem Sensorgehäuse kann durch Schrauben hergestellt werden. Alternativ sind auch andere Verbindungsmethoden anwendbar, wie z.B. eine Klebung, Verklipsung bzw. Verrastung oder Verklemmung, eine Verschweißung wie z.B. Reibschweißen, Laserschweißen, usw., ein Andrücken oder eine andere Art der festen Verbindung, ggf. auch durch weitere hierzu benötigte Bauteile.

Nach Fertigstellung der so komplettierten Baugruppe können die Bondverbindungen z.B. zu einer Leiterplatte hin erstellt werden. Dazu sind in der Wärmebrücke zwei Aussparungen vorgesehen, über die der Bondkeil Zugang zu den Bondpads auf der Membranseite der Chips erhält. Alternativ können die Bondverbindungen auch zu einer anderen Art von Schaltungsträger geführt werden, wie z.B. einem Hybrid-Schaltkreis oder aber auf einen Leiterkamm oder aber direkt auf einen weiteren Halbleiterchip oder ein anderes elektronisches Bauteil. Wiederum alternativ kann die Wärmebrücke auch so gestaltet werden, dass beide Sensorchips direkt untereinander durch eine oder mehrere Bonddrähte miteinander verbunden werden.

### Kurze Beschreibung der Figuren

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Querschnittsansicht einer Sensorvorrichtung gemäß einer ersten Ausführungsform,
- Figur 2: eine Unteransicht in Explosionsdarstellung einer Sensorvorrichtung gemäß einer zweiten Ausführungsform,
- Figur 3: eine Unteransicht der Sensorvorrichtung der zweiten Ausführungsform,
- Figur 4: eine Draufsicht in Explosionsdarstellung der Sensorvorrichtung der zweiten Ausführungsform,
- Figur 5: eine perspektivische Ansicht eines ersten Verfahrensschritts zum Herstellen der Sensorvorrichtung,
- Figur 6: eine perspektivische Ansicht eines zweiten Verfahrensschritts zum Herstellen der Sensorvorrichtung,
- Figur 7: eine perspektivische Ansicht eines dritten Verfahrensschritts zum Herstellen der Sensorvorrichtung und
- Figur 8: eine perspektivische Ansicht eines vierten Verfahrensschritts zum Herstellen der Sensorvorrichtung.

### Ausführungsformen der Erfindung

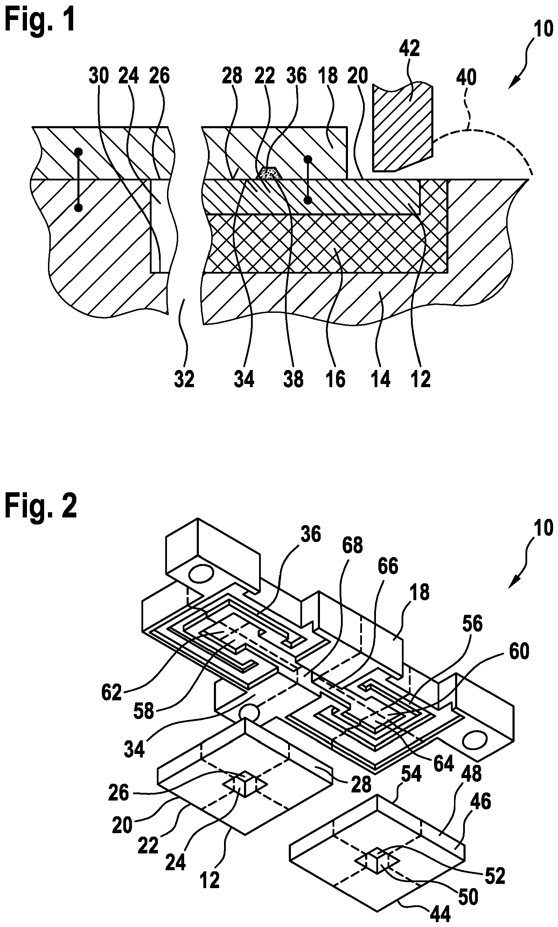

Figur 1 zeigt eine Querschnittsansicht einer Sensorvorrichtung 10 zur Erfassung mindestens einer Eigenschaft eines fluiden Mediums, insbesondere eines Gases, gemäße einer ersten Ausführungsform der vorliegenden Erfindung. Die Sensorvorrichtung 10 umfasst mindestens ein erstes Sensorelement 12, ein Gehäuse 14, mindestens ein erstes Dichtelement 16 und ein Vorspannelement 18.

Das erste Sensorelement 12 kann als erster Chip 20 ausgebildet sein. Der erste Chip 20 kann mindestens ein erstes Basiselement 22 umfassen, welches mindestens eine erste Kaverne 24 aufweist. Das erste Basiselement 22 und/oder die erste Kaverne 24 können eine quaderförmige Grundform aufweisen. Das erste Sensorelement 12 umfasst weiterhin mindestens eine erste Membran 26. Die erste Membran 26 kann sich über eine Oberfläche 28 des erste Basiselements 22 erstrecken und die Kaverne 24 zumindest teilweise bedecken. Die erste Membran 26 und das erste Basiselement 22 können gemeinsam als erste Chip 20 ausgebildet sein. Das Basiselement 22 und/oder die erste Membran 26 können aus mindestens einem Halbleitermaterial in Reinform oder als Verbindung hergestellt sein. Das erste Sensorelement 12 kann insbesondere eingerichtet sein, um eine Wärmeleitfähigkeit des fluiden Mediums zu bestimmen.

Das Gehäuse 14 kann ganz oder teilweise als Rohr ausgebildet sein. Das Gehäuse 14 kann alternativ oder zusätzlich einen Steckfühler umfassen, welcher beispielsweise in dem Rohr befestigt ist. Das Rohr kann beispielsweise einen runden oder polygonalen Querschnitt aufweisen. Das Gehäuse 14 umfasst mindestens eine erste Aufnahme 30. Das erste Sensorelement 12 ist ganz oder teilweise in der ersten Aufnahme 30 aufgenommen. Das Gehäuse 14 kann einen ersten Gehäuseinnenraum 32 umschließen. Weiterhin kann das Gehäuse 14 ganz oder teilweise aus einem starren Material hergestellt sein, beispielsweise aus einem Metall und/oder einem Kunststoff. Der erste Gehäuseinnenraum 32 kann eingerichtet sein, um das fluide Medium aufzunehmen.

Das erste Dichtelement 16 ist zwischen dem ersten Sensorelement 12 und dem Gehäuse 14 angeordnet. Das erste Dichtelement 16 ist aus einem medienresistenten Elastomer hergestellt, wie beispielsweise Ethylen-Propylen-Dien-Kautschuk. Das erste Dichtelement 16 ist eingerichtet, um das erste Sensorelement 12 gegen das Gehäuse 14 abzudichten. Weiterhin kann das erste Dichtelement 16 eingerichtet sein, um Wärme an den ersten Gehäuseinnenraum 32 zu übertragen.

Das Vorspannelement 18 ist zum Vorspannen des ersten Sensorelements 12 gegen das erste Dichtelement 16 ausgebildet. Mit anderen Worten drückt das Vorspannelement 18 das erste Sensorelement 12 gegen das erste Dichtelement 16. Zu diesem Zweck ist das Vorspannelement 18 mit dem Gehäuse 14 fest verbunden. Das Vorspannelement 18 ist aus einem wärmeleitfähigen Material hergestellt, wie beispielsweise Metall. Das erste Sensorelement 12 und das Vorspannelement 18 sind stoffschlüssig miteinander verbunden. Beispielsweise sind das erste Sensorelement 12 und das Vorspannelement 18 mittels eines Klebstoffs miteinander verbunden. Zu diesem Zweck kann das Vorspannelement 18 auf einer dem ersten Sensorelement 12 zugewandten Unterseite 34 eine erste Nut 36 aufweisen, die mit einem Klebstoff 38 gefüllt ist. Alternativ kann auch eine flächige Verbindung zwischen dem ersten Sensorelement 12 und dem Vorspannelement 18 mittels des Klebstoffs 38 realisiert sein. Bevorzugt wird ein wärmeleitfähiger Klebstoff verwendet, wie beispielsweise ein Klebstoff auf Epoxid-Basis.

Entsprechend ist das erste Sensorelement 12 mit dem Vorspannelement 18 durch eine starre Klebung auf Zug verbunden. Dadurch ist es möglich, das erste Sensorelement 12 mittels mindestens eines ersten Bonddrahts 40 elektrisch zu kontaktieren und dieses mit den weiteren Funktionselementen der Sensorvorrichtung 10 (in Figur 1 nicht näher gezeigt) elektrisch zu verbinden. Diese weiteren Funktionselemente können beispielsweise auf einer Leiterplatte untergebracht sein. So wird der erste Bonddraht 40 mittels eines Bondkeils 42 auf dem ersten Sensorelement 12 befestigt und von dort bogenförmig auf die Leiterplatte gezogen. Für den Bondprozess kommen je nach verwendeten Materialien Geometrien, wie beispielsweise Bondpads auf dem Chip 20, Bondpads auf der Leiterplatte, Bonddraht usw., unterschiedliche Verfahren in Frage, wie beispielsweise ein Ball- oder Wedge-Bond-Prozess. Die beim Bondvorgang eingebrachten Kräfte werden somit primär nicht auf das erste Dichtelement 16 übertragen, sondern als Scher- und/oder Zugkräfte über die Klebstoffverbindung, das Vorspannelement 18 und die Verbindung des Vorspannelements 18 mit dem Gehäuse 14 auf das Gehäuse 14 abgeleitet, so dass das erste Sensorelement 12 deutlich geringere Bewegungsamplituden zeigt, als wenn es durch das Vorspannelement 18 lediglich gegen das erste Dichtelement 16 gedrückt würde.

Figur 2 zeigt eine Unteransicht in Explosionsdarstellung einer Sensorvorrichtung 10 gemäß einer zweiten Ausführungsform der Erfindung. Nachstehend werden lediglich die Unterschiede zu der vorhergehenden Ausführungsform beschrieben, und gleiche Bauteile sind mit gleichen Bezugszeichen versehen. Die Sensorvorrichtung 10 der zweiten Ausführungsform weist ein zweites Sensorelement 44 zur Erfassung der mindestens einen Eigenschaft des fluiden Mediums auf. Das zweite Sensorelement 44 ist zumindest ähnlich und bevorzugt identisch zu dem ersten Sensorelement 12 ausgebildet. Das zweite Sensorelement 44 kann als zweiter Chip 46 ausgebildet sein. Der zweite Chip 46 kann mindestens ein zweites Basiselement 48 umfassen, welches mindestens eine zweite Kaverne 50 aufweist. Das zweite Basiselement 48 und/oder die zweite Kaverne 50 können eine quaderförmige Grundform aufweisen. Das zweite Sensorelement 44 umfasst weiterhin mindestens eine zweite Membran 52. Die zweite Membran 52 kann sich über eine Oberfläche 54 des zweiten Basiselements 48 erstrecken und die zweite Kaverne 50 zumindest teilweise bedecken. Die zweite Membran 52 und das zweite Basiselement 48 können gemeinsam als zweiter Chip 46 ausgebildet sein. Das zweite Basiselement 48 und/oder die zweite Membran 52 können aus mindestens einem Halbleitermaterial in Reinform oder als Verbindung hergestellt sein. Das zweite Sensorelement 44 kann insbesondere eingerichtet sein, um eine Wärmeleitfähigkeit des fluiden Mediums zu bestimmen.

Wie das erste Sensorelement 12 kann das Vorspannelement 18 mit dem zweiten Sensorelement 44 stoffschlüssig verbunden sein, insbesondere mittels des Klebstoffs 38. Zu diesem Zweck kann das Vorspannelement 18 auf der Unterseite 34 eine zweite Nut 56 aufweisen, die mit dem Klebstoff 38 gefüllt ist. Alternativ kann das zweite Sensorelement 44 mit dem Vorspannelement 18 flächig miteinander verbunden sein. Wie in Figur 2 gezeigt, weist das Vorspannelement 18 auf seiner Unterseite 34 eine erste Aussparung 58 und eine zweite Aussparung 60 auf. Dadurch ist das Vorspannelement 18 derart ausgebildet, dass es mit der ersten Membran 26 ein erstes Referenzvolumen 62 und mit der zweiten Membran 52 ein zweites Referenzvolumen 64 einschließt. Über einen halboffenen Verbindungskanal 66 sind das erste Referenzvolumen 62 und das zweite Referenzvolumen 64 miteinander verbunden. Des Weiteren stehen das erste Referenzvolumen 62 und das zweite Referenzvolumen 64 über eine gemeinsame Öffnung 68 im Bereich des Verbindungskanals 66 nach oben mit einem nicht näher gezeigten Innenraum der Sensorvorrichtung 10 in Verbindung.

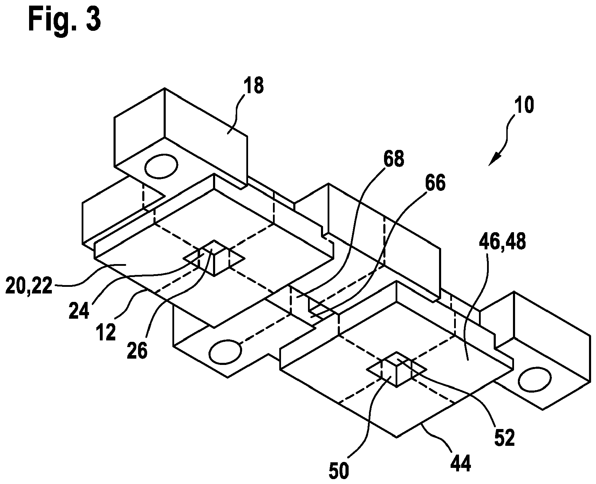

Figur 3 zeigt eine Unteransicht der Sensorvorrichtung 10 der zweiten Ausführungsform. Gezeigt ist, wie das erste Sensorelement 12 und das zweite Sensorelement 44 mit dem Vorspannelement 18 montiert sind. Dabei weist die erste Membran 26 der ersten Aussparung 58 zu, und die zweite Membran 52 weist der zweiten Aussparung 60 zu. Zu erkennen ist weiterhin die Öffnung 68 im Bereich des Verbindungskanals 66.

Figur 4 zeigt eine Explosionsdarstellung der Sensorvorrichtung 10 der zweiten Ausführungsform. Wie aus Figur 4 zu erkennen ist, weist das Gehäuse 14 eine zweite Aufnahme 70 auf. Die Sensorvorrichtung 10 umfasst weiterhin ein zweites Dichtelement 72. Das zweite Dichtelement 72 kann zumindest teilweise aus einem medienresistenten Material hergestellt sein. Insbesondere kann das zweite Dichtelement 72 ganz oder teilweise aus einem Elastomer, insbesondere aus einem Ethylen-Propylen-Dien-Kautschuk hergestellt sein. Das zweite Dichtelement 72 ist eingerichtet, um das zweite Sensorelement 44 gegen das Gehäuse 14 abzudichten. Das Gehäuse 14 kann einen zweiten Gehäuseinnenraum 74 umschließen. Weiterhin kann das zweite Dichtelement 72 eingerichtet sein, um Wärme an den zweiten Gehäuseinnenraum 74 zu übertragen.

Nachstehend wird beschrieben, wie die Sensorvorrichtung 10 der ersten und der zweiten Ausführungsform hergestellt werden können.

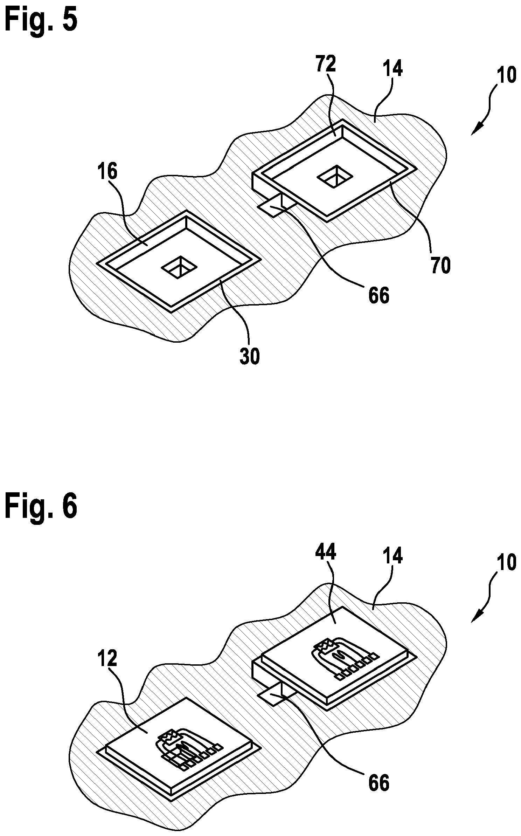

Figur 5 zeigt eine Draufsicht auf einen ersten Verfahrensschritt zum Herstellen der Sensorvorrichtung 10. Zu erkennen ist das Gehäuse 14 mit der ersten Aufnahme 30 und der optionalen zweiten Aufnahme 70. In die erste Aufnahme 30 wird das erste Dichtelement 16 eingesetzt, und in die zweite Aufnahme 70 wird das zweite Dichtelement 72 eingesetzt.

Figur 6 zeigt eine Draufsicht auf einen zweiten Verfahrensschritt zur Herstellung der Sensorvorrichtung 10. Auf das erste Dichtelement 16 wird das erste Sensorelement 12 gesetzt. Analog wird auf das zweite Dichtelement 72 das zweite Sensorelement 44 gesetzt. Bevorzugt werden das erste Sensorelement 12 und das zweite Sensorelement 44 jedoch zuerst an dem Vorspannelement 18 befestigt und dann erst in das Gehäuse 14 bzw. die Dichtelemente 16, 72 eingesetzt, wie in Figur 3 gezeigt ist.

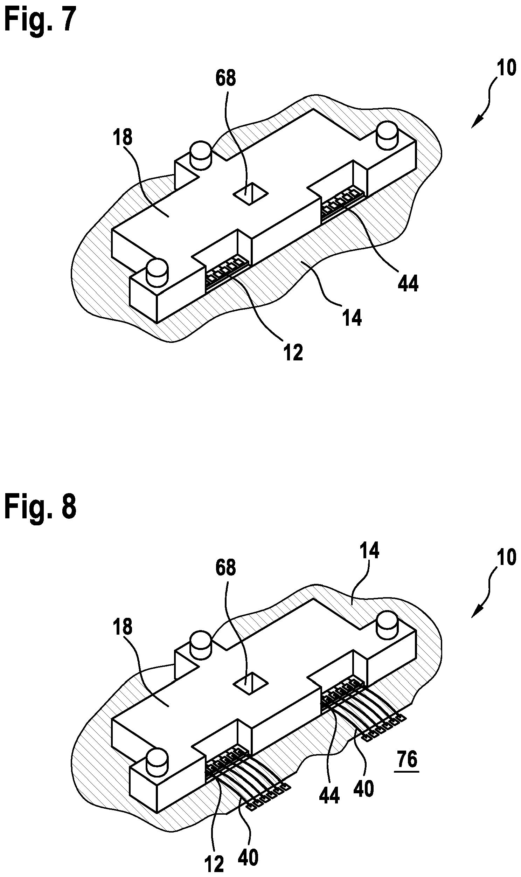

Figur 7 zeigt eine Draufsicht auf einen dritten Verfahrensschritt zum Herstellen der Sensorvorrichtung 10. Das Vorspannelement 18 wird mit dem ersten Sensorelement 12 und mit dem zweiten Sensorelement 44 mittels des Klebstoffs 38 stoffschlüssig verbunden. Der Klebstoff 38 wird dabei in die erste Nut 36 und in die zweite Nut 56 eingefüllt. Das Vorspannelement 18 spannt dabei das erste Sensorelement 12 und das zweite Sensorelement 44 gegen das Gehäuse 14 vor.

Figur 8 zeigt eine Draufsicht auf einen vierten Verfahrensschritt zum Herstellen der Sensorvorrichtung 10. Das erste Sensorelement 12 wird mittels mindestens eines ersten Bonddrahts 40 elektrisch kontaktiert, beispielsweise mit einer Leiterplatte 76 elektrisch verbunden. Analog wird das zweite Sensorelement 44 mittels mindestens eines zweiten Bonddrahts 78 elektrisch kontaktiert, beispielsweise mit der Leiterplatte 76 elektrisch verbunden. Mittels des Vorspannelements 18 sind das erste Sensorelement 12 und das zweite Sensorelement 44 wärmeleitfähig verbunden, da das Vorspannelement 18 aus einem wärmeleitfähigen Material, insbesondere Metall, hergestellt ist.

## Patentansprüche

1. Sensorvorrichtung (10) zur Erfassung mindestens einer Eigenschaft eines fluiden Mediums, umfassend mindestens ein erstes Sensorelement (12) zur Erfassung der mindestens einen Eigenschaft, wobei das erste Sensorelement (12) mindestens eine erste Membran (26) aufweist, mindestens ein Gehäuse (14) mit mindestens einer ersten Aufnahme (30), wobei das erste Sensorelement (12) zumindest teilweise in der ersten Aufnahme (30) aufgenommen ist, mindestens ein erstes Dichtelement (16), wobei das erste Dichtelement (16) zwischen dem ersten Sensorelement (12) und dem Gehäuse (14) angeordnet und zum Abdichten des ersten Sensorelements (12) gegen das Gehäuse (14) ausgebildet ist, und ein Vorspannelement (18), wobei das Vorspannelement (18) zum Vorspannen des ersten Sensorelements (12) gegen das erste Dichtelement (16) ausgebildet ist,
**dadurch gekennzeichnet, dass**
das erste Sensorelement (12) und das Vorspannelement (18) stoffschlüssig miteinander verbunden sind.

2. Sensorvorrichtung (10) nach dem vorhergehenden Anspruch, wobei das erste Sensorelement (12) und das Vorspannelement (18) mittels eines Klebstoffs (38) miteinander verbunden sind.

3. Sensorvorrichtung (10) nach dem vorhergehenden Anspruch, wobei das erste Sensorelement (12) und das Vorspannelement (18) mittels eines Klebstoffs (38) flächig miteinander verbunden sind oder das Vorspannelement (18) eine mit Klebstoff (38) gefüllte erste Nut (36) aufweist.

4. Sensorvorrichtung (10) nach einem der vorhergehenden Ansprüche, wobei das erste Sensorelement (12) mittels mindestens eines ersten Bonddrahts (40) elektrisch kontaktiert ist.

5. Sensorvorrichtung (10) nach einem der vorhergehenden Ansprüche, wobei das Gehäuse (14) eine zweite Aufnahme (70) aufweist, wobei die Sensorvorrichtung (10) weiterhin mindestens ein zweites Sensorelement (44) zur Erfassung der mindestens einen Eigenschaft und ein zweites Dichtelement (72) umfasst, wobei das zweite Sensorelement (44) mindestens eine zweite Membran (52) aufweist, wobei das zweite Sensorelement (44) zumindest teilweise in der zweiten Aufnahme (70) aufgenommen ist, wobei das zweite Dichtelement (72) zwischen dem zweiten Sensorelement (44) und dem Gehäuse (14) angeordnet und zum Abdichten des zweiten Sensorelements (44) gegen das Gehäuse (14) ausgebildet ist, wobei das zweite Sensorelement (44) und das Vorspannelement (18) stoffschlüssig miteinander verbunden sind.

6. Sensorvorrichtung (10) nach dem vorhergehenden Anspruch, wobei das zweite Sensorelement (44) und das Vorspannelement (18) mittels eines Klebstoffs (38) flächig miteinander verbunden sind oder das Vorspannelement (18) eine mit Klebstoff (38) gefüllte zweite Nut (56) aufweist.

7. Sensorvorrichtung (10) nach einem der beiden vorhergehenden Ansprüche, wobei das erste Sensorelement (12) und das zweite Sensorelement (44) wärmeleitfähig miteinander verbunden sind.

8. Sensorvorrichtung (10) nach einem der drei vorhergehenden Ansprüche, wobei das Vorspannelement (18) derart ausgebildet ist, dass es mit der ersten Membran (26) ein erstes Referenzvolumen (62) und mit der zweiten Membran (52) ein zweites Referenzvolumen (64) einschließt.

9. Sensorvorrichtung (10) nach dem vorhergehenden Anspruch, wobei das erste Referenzvolumen (62) und das zweite Referenzvolumen (64) miteinander verbunden sind.

10. Sensorvorrichtung (10) nach einem der fünf vorhergehenden Ansprüche, wobei das zweite Sensorelement (44) mittels mindestens eines zweiten Bonddrahts (78) elektrisch kontaktiert ist.

## Claims

1. Sensor apparatus (10) for the detection of at least one property of a fluid medium, comprising at least one first sensor element (12) for the detection of the at least one property, the first sensor element (12) having at least one first membrane (26), further comprising at least one housing (14) with at least one first receptacle (30), the first sensor element (12) being received at least partially in the first receptacle (30), further comprising at least one first sealing element (16), the first sealing element (16) being arranged between the first sensor element (12) and the housing (14) and being configured for sealing the first sensor element (12) against the housing (14), and further comprising a prestressing element (18), the prestressing element (18) being configured for prestressing the first sensor element (12) against the first sealing element (16), **characterized in that** the first sensor element (12) and the prestressing element (18) are connected to one another in an integrally joined manner.

2. Sensor apparatus (10) according to the preceding claim, the first sensor element (12) and the prestressing element (18) being connected to one another by means of an adhesive (38).

3. Sensor apparatus (10) according to the preceding claim, the first sensor element (12) and the prestressing element (18) being connected flatly to one another by means of an adhesive (38), or the prestressing element (18) having a first groove (36) which is filled with adhesive (38).

4. Sensor apparatus (10) according to one of the preceding claims, the first sensor element (12) being contacted electrically by means of at least one first bond wire (40).

5. Sensor apparatus (10) according to one of the preceding claims, the housing (14) having a second receptacle (70), the sensor apparatus (10) comprising, furthermore, at least one second sensor element (44) for the detection of the at least one property and a second sealing element (72), the second sensor element (44) having at least one second membrane (52), the second sensor element (44) being received at least partially in the second receptacle (70), the second sealing element (72) being arranged between the second sensor element (44) and the housing (14) and being configured for sealing the second sensor element (44) against the housing (14), the second sensor element (44) and the prestressing element (18) being connected to one another in an integrally joined manner.

6. Sensor apparatus (10) according to the preceding claim, the second sensor element (44) and the prestressing element (18) being connected flatly to one another by means of an adhesive (38), or the prestressing element (18) having a second groove (56) which is filled with adhesive (38).

7. Sensor apparatus (10) according to either of the two preceding claims, the first sensor element (12) and the second sensor element (44) being connected to one another in a thermally conductive manner.

8. Sensor apparatus (10) according to one of the three preceding claims, the prestressing element (18) being configured in such a way that it encloses a first reference volume (62) with the first membrane (26) and encloses a second reference volume (64) with the second membrane (52).

9. Sensor apparatus (10) according to the preceding claim, the first reference volume (62) and the second reference volume (64) being connected to one another.

10. Sensor apparatus (10) according to one of the five preceding claims, the second sensor element (44) being contacted electrically by means of at least one second bond wire (78).

## Revendications

1. Arrangement capteur (10) destiné à détecter au moins une propriété d'un milieu fluide, comprenant au moins un premier élément capteur (12) destiné à détecter l'au moins une propriété, le premier élément capteur (12) possédant au moins une première membrane (26), au moins un boîtier (14) doté d'au moins un premier logement (30), le premier élément capteur (12) étant au moins partiellement accueilli dans le premier logement (30), au moins un premier élément d'étanchéité (16), le premier élément d'étanchéité (16) étant disposé entre le premier élément capteur (12) et le boîtier (14) et étant configuré pour réaliser l'étanchéité du premier élément capteur (12) par rapport au boîtier (14), et un élément de précontrainte (18), l'élément de précontrainte (18) étant configuré pour précontraindre le premier élément capteur (12) contre le premier élément d'étanchéité (16),
**caractérisé en ce que**
le premier élément capteur (12) et l'élément de précontrainte (18) sont reliés l'un à l'autre par fusion de matières.

2. Arrangement capteur (10) selon la revendication précédente, le premier élément capteur (12) et l'élément de précontrainte (18) étant reliés l'un à l'autre au moyen d'un adhésif (38).

3. Arrangement capteur (10) selon la revendication précédente, le premier élément capteur (12) et l'élément de précontrainte (18) étant reliés l'un à l'autre à plat au moyen d'un adhésif (38) ou l'élément de précontrainte (18) possédant une première rainure (36) remplie d'adhésif (38).

4. Arrangement capteur (10) selon l'une des revendications précédentes, un contact électrique étant établi avec le premier élément capteur (12) au moyen d'au moins un premier fil de connexion (40).

5. Arrangement capteur (10) selon l'une des revendications précédentes, le boîtier (14) possédant un deuxième logement (70), l'arrangement capteur (10) comportant en outre au moins un deuxième élément capteur (44) destiné à détecter l'au moins une propriété et un deuxième élément d'étanchéité (72), le deuxième élément capteur (44) possédant au moins une deuxième membrane (52), le deuxième élément capteur (44) étant au moins partiellement accueilli dans le deuxième logement (70), le deuxième élément d'étanchéité (72) étant disposé entre le deuxième élément capteur (44) et le boîtier (14) et étant configuré pour réaliser l'étanchéité du deuxième élément capteur (44) par rapport au boîtier (14), le deuxième élément capteur (44) et l'élément de précontrainte (18) étant reliés l'un à l'autre par fusion de matières.

6. Arrangement capteur (10) selon la revendication précédente, le deuxième élément capteur (44) et l'élément de précontrainte (18) étant reliés l'un à l'autre à plat au moyen d'un adhésif (38) ou l'élément de précontrainte (18) possédant une deuxième rainure (56) remplie d'adhésif (38).

7. Arrangement capteur (10) selon l'une des deux revendications précédentes, le premier élément capteur (12) et le deuxième élément capteur (44) étant reliés l'un à l'autre avec conduction thermique.

8. Arrangement capteur (10) selon l'une des trois revendications précédentes, l'élément de précontrainte (18) étant configuré de telle sorte qu'il enferme un premier volume de référence (62) avec la première membrane (26) et un deuxième volume de référence (64) avec la deuxième membrane (52).

9. Arrangement capteur (10) selon la revendication précédente, le premier volume de référence (62) et le deuxième volume de référence (64) étant reliés l'un à l'autre.

10. Arrangement capteur (10) selon l'une des cinq revendications précédentes, un contact électrique étant établi avec le deuxième élément capteur (44) au moyen d'au moins un deuxième fil de connexion (78).
